# EUROPÄISCHE PATENTSCHRIFT

(11) **EP 1 426 237 B1**
(45) Veröffentlichungstag und Bekanntmachung des Hinweises auf die Patenterteilung: **16.02.2011**
(21) Anmeldenummer: 03104467.0
(22) Anmeldetag: 01.12.2003
(51) Int. Cl.: B60R 11/00

(54) **Bauteil zum Einbau in geringem Abstand unter der äusseren Karosseriehaut eines Kraftfahrzeuges im Fussgängeraufprallbereich**
Component mounted with a small gap under the bodywork of a vehicle in a pedestrian impact region
Composant monté à faible distance du dessous de la carosserie d'un véhicule, dans une zone de choc avec un piéton

(30) Priorität: 06.12.2002 DE 10257072
(43) Veröffentlichungstag der Anmeldung: 09.06.2004
(73) Patentinhaber: MANN+HUMMEL GmbH, 71638 Ludwigsburg (DE)
(72) Erfinder: Bauer, Sascha, 71549 Auenwald (DE); Arnegger, Klaus, 71636 Ludwigsburg (DE)

(56) Entgegenhaltungen:
- EP-A- 0 583 079
- DE-A- 10 011 944
- DE-A- 10 063 778
- PATENT ABSTRACTS OF JAPAN vol. 1996, no. 01, 31. Januar 1996 (1996-01-31) & JP 07 237522 A (TOYOTA MOTOR CORP;OTHERS: 01), 12. September 1995 (1995-09-12)

## Beschreibung

Die Erfindung betrifft ein Bauteil zum Einbau in geringem Abstand unter der äußeren Karosseriehaut wie z. B. der Motorhaube, den Kotflügeln oder der Frontverkleidung eines Kraftfahrzeuges im aufprallgefährdeten Bereich von Fußgängern.

Aus der DE 100 63 778 A1 ist es bekannt, einen Luftfilterkasten als Crashbox auszubilden. Beim Aufprall eines Fußgängers auf die Motorhaube des Kraftfahrzeugs soll die Crashbox sich bei gleichzeitiger Energieaufnahme verformen.

Der Erfindung liegt die Aufgabe zugrunde, ein Bauteil zum Einbau in geringem Abstand unter der Motorhaube eines Kraftfahrzeuges zu schaffen, das bereits bei geringen Aufprallkräften einen großen Verformungsweg zurücklegt und gleichzeitig eine ausreichende Schwingungsfestigkeit und Formstabilität im Betrieb besitzt.

Diese Aufgabe wird durch ein Bauteil mit den Merkmalen des Anspruchs 1 gelöst.

Durch die Ausbildung des Gehäuses des Bauteils mit einem Abschnitt mit geringer mechanischer Festigkeit wird das Bauteil im Falle einer schlagartigen Kraftbeaufschlagung auf die äußere Karosseriehaut wie z. B. die Motorhaube, die Kotflügel oder die Frontverkleidung, wie beispielsweise beim Aufprall eines Fußgängers in dem Abschnitt mit geringer mechanischer Festigkeit nachgeben. Dadurch ist sichergestellt, daß das Bauteil bereits bei vergleichsweise geringen auftreffenden Kräften eine große Verformung aufweist, so daß die Verletzungsgefahr für den Fußgänger minimiert ist. Trotzdem kann eine ausreichende mechanische Stabilität des Bauteils unter normalen Betriebsbedingungen gewährleistet werden.

Zweckmäßig ist der Abschnitt mit geringer Festigkeit umlaufend am Gehäuse angeordnet. Eine einfache Ausgestaltung ergibt sich, wenn der Abschnitt als Sollbruchstelle ausgebildet ist. Die Sollbruchstelle besitzt zweckmäßig gegenüber benachbarten Bereichen eine geringe Wandstärke. Insbesondere ist die Sollbruchstelle durch eine umlaufende Nut gebildet. Eine derartig ausgebildete Sollbruchstelle kann einfach, insbesondere in einem Arbeitsgang mit dem Gehäuse, hergestellt werden. Bei Gehäusen aus Kunststoff wird eine Wandstärke an der Sollbruchstelle zwischen 0,5 mm und 1,0 mm, insbesondere von etwa 0,8 mm, als vorteilhaft angesehen. Um eine ausreichende Verformung des Bauteils zu gewährleisten, ist vorgesehen, daß das Außenmaß des Gehäuses auf der einen Seite der Sollbruchstelle kleiner als die Innenweite des Gehäuses auf der gegenüberliegenden Seite der Sollbruchstelle ist. Hierdurch kann das Gehäuse bei einem Aufprall teleskopartig ineinandergeschoben werden. Bereits durch eine geringe Aufprallkraft kann so eine große Deformation sichergestellt werden.

Es kann zweckmäßig sein, daß ein zur Verformung bestimmter Abschnitt durch ein Material mit geringer mechanischer Festigkeit gebildet ist. Das Gehäuse besteht so aus mindestens zwei Werkstoffen, dem Grundmaterial und dem Material mit der geringen Festigkeit. Das Material mit geringer Festigkeit kann zweckmäßig als umlaufende Falte an dem Gehäuse angeordnet sein. Das Material ist zweckmäßig ein Elastomerwerkstoff, insbesondere EPDM.

Es kann jedoch auch vorteilhaft sein, daß ein Abschnitt durch ein poröses Material gebildet ist. Das poröse Material ist dabei vorteilhaft ein Sinterwerkstoff oder ein geschäumter Werkstoff. Die Ausbildung des Gehäuses mindestens teilweise aus einem porösen Material, wie einem Sinterwerkstoff oder einem geschäumten Werkstoff hat gleichzeitig eine erhöhte Geräuschdämpfung der Ansauggeräusche zur Folge.

Zweckmäßig ist das Bauteil ein Luftfiltersystem. Aufgrund des im Gehäuse gebildeten Hohlraums kann das Luftfiltersystem gut verformt werden. Für die Verformung ist im wesentlichen das Gehäuse des Luftfilters maßgeblich, da das im Gehäuse angeordnete Filtermaterial üblicherweise eine geringe mechanische Festigkeit aufweist und so gut verformt werden kann. Das Gehäuse des Luftfilters ist insbesondere aus zwei Halbschalen gebildet. Üblicherweise ist die Reinseite des Luftfiltersystems im Kraftfahrzeug der Motorhaube zugewandt angeordnet. Insbesondere in diesem Fall ist vorgesehen, daß die die Reinseite des Luftfiltersystems umfassende Halbschale des Gehäuses aus einem porösen Material sowie einer das poröse Material bedeckenden Folie aufgebaut ist. Durch die Folie kann vermieden werden, daß durch Leckage bereits filtrierte Luft erneut verschmutzt wird. Die Folie kann auf der Innen- oder der Außenseite der Halbschale angeordnet sein. Da die Reinseite direkt unterhalb der Motorhaube angeordnet ist, kann die Aufprallkraft direkt in das poröse Material geleitet werden und so zu dessen Verformung führen. Es kann jedoch auch zweckmäßig sein, daß die die Rohseite umfassende Halbschale aus einem porösen Material besteht. Da auf der Rohseite Leckagen zugelassen werden können, ist bei der Ausbildung der die Rohluftseite umfassenden Halbschale aus einem porösen Material die Abdeckung mit einer Folie auf der Innen- oder Außenseite der Halbschale nicht notwendig.

Ausführungsbeispiele der Erfindung werden im folgenden anhand der Zeichnung erläutert. Es zeigen:
- Fig. 1: eine perspektivische Ansicht eines Luftfilters,
- Fig. 2: einen Längsschnitt durch einen unter einer Motorhaube angeordneten Luftfilter,
- Fig. 4: einen Schnitt durch einen Luftfilter entlang der Linie III-III in Fig. 2,

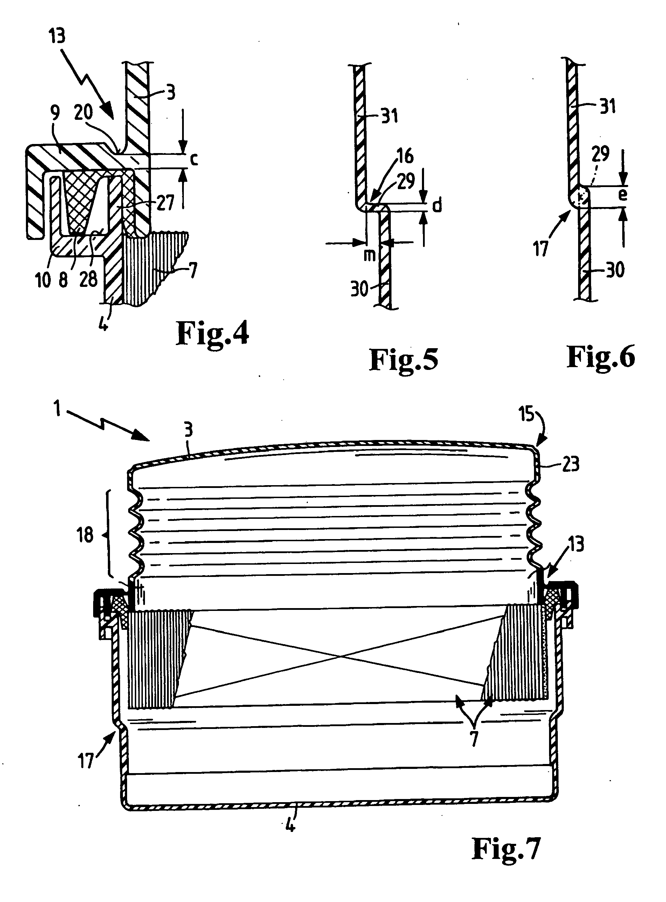

- Fig. 4 bis 6: schematische Schnittdarstellungen durch Sollbruchstellen,

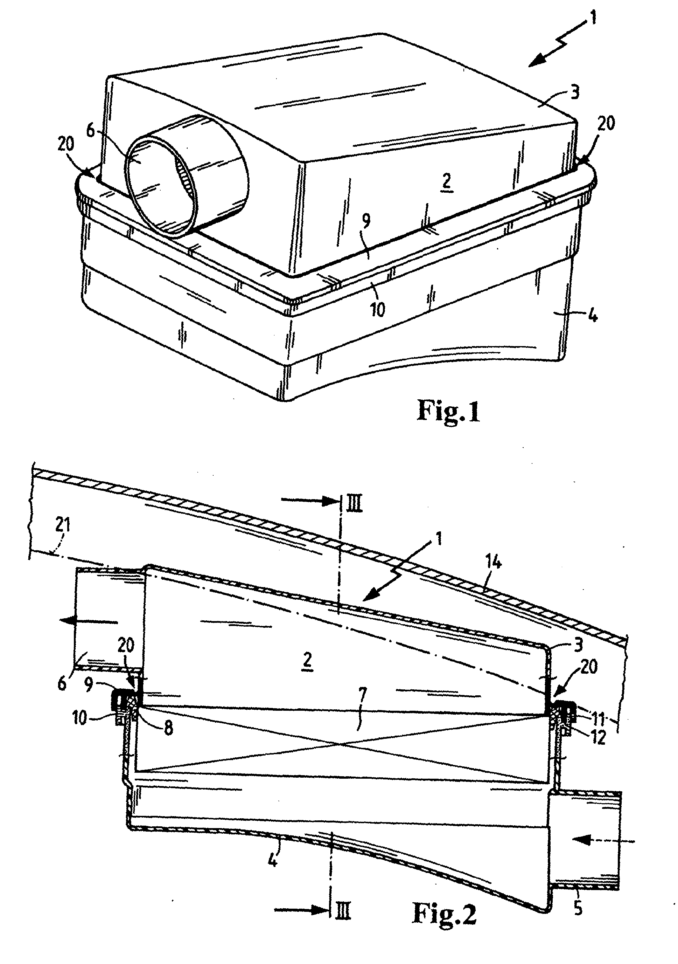

- Fig. 7: einen Schnitt durch einen Luftfilter entsprechend der Linie III-III in Fig. 2.

Fig. 1 zeigt ein Luftfiltersystem 1 für den Verbrennungsmotor in einem Kraftfahrzeug. Das Luftfiltersystem 1 besitzt ein Gehäuse 2, das aus einer ersten Halbschale 3 sowie einer zweiten Halbschale 4 gebildet ist. Die Halbschalen 3 und 4 weisen Ränder 9 und 10 auf, an denen sie miteinander verbunden sind.

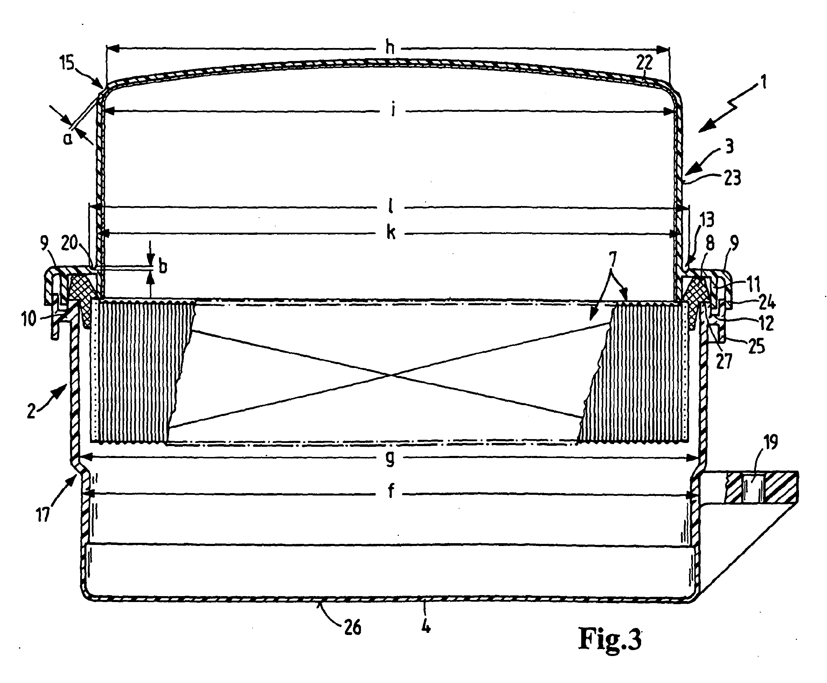

In Fig. 2 ist das Luftfiltersystem 1 im Schnitt in Einbaulage dargestellt. Um beim Aufprall von Fußgängern auf die äußere Karosseriehaut die Verletzungen des Fußgängers möglichst gering zu halten, wird gefordert, daß alle Bauteile unter der äußeren Karosseriehaut zu dieser einen gewissen Abstand besitzen. Dieser Abstand ist in Fig. 2 durch die Linie 21 als Abstand zur Motorhaube 14 verdeutlicht. Ist wegen der Einbaubedingungen ein Bauteil dennoch in einem geringeren Abstand unter der Motorhaube 14 angeordnet, so muß dieses bereits bei geringen Aufprallkräften eine hohe Deformation aufweisen, um Verletzungen des Fußgängers zu vermeiden. Die äußere Karosseriehaut kann im aufprallgefährdeten Bereich für Fußgänger anstatt durch die Motorhaube 14 beispielsweise auch durch die Kotflügel oder die Frontverkleidung gebildet sein. Das in Fig. 2 im Längsschnitt dargestellte Luftfiltersystem 1 besitzt eine Rohluftseite, die im wesentlichen in der zweiten Halbschale 4 ausgebildet ist. In die zweite Halbschale 4 mündet ein Rohluftstutzen 5, durch den dem Filter Rohluft zugeführt wird. Die erste Halbschale 3 umfaßt die Reinluftseite des Filtersystems 1, aus der der Reinluftstutzen 6 führt. Zwischen der Rohluftseite und der Reinluftseite ist ein Filtereinsatz 7 angeordnet. Der Filtereinsatz 7 besitzt eine umlaufende Dichtung 8, die zwischen dem Rand 9 der ersten Halbschale 3 und dem Rand 10 der zweiten Halbschale 4 gehalten ist. Die Rohluftseite und die Reinluftseite sind somit durch das Filtermaterial des Filtereinsatzes 7 fluidisch voneinander getrennt. Die beiden Halbschalen 3 und 4 bilden einen Sitz für die Dichtung 8. Die Dichtung 8 liegt dabei am Steg 9 an und wird von dem in Fig. 3 dargestellten Rand 27 der zweiten Halbschale 4 fixiert. Radial nach außen ist ein Steg 11 am Rand 9 angeordnet, der in eine am Rand 10 der zweiten Halbschale 4 ausgebildete Nut 12 ragt. Nach Art einer Labyrinthdichtung sind radial nach außen noch ein Steg 25 am Rand 10 sowie ein Steg 24 am Rand 9 vorgesehen, wie in Fig. 3 dargestellt. Bis auf den Filtereinsatz 7 ist das Gehäuse 2 des Luftfiltersystems 1 hohl. Das Gehäuse 2 des Luftfiltersystems 1 ist üblicherweise aus einem Kunststoff gefertigt.

In Fig. 3 ist das Luftfiltersystem 1 im Schnitt gezeigt. Um bei einem Aufprall eine hohe Deformation zu erreichen, besitzt das Gehäuse 2 des Luftfiltersystems 1 Abschnitte mit geringer mechanischer Festigkeit. Bei einem Aufprall versagt das Material in diesen Bereichen, und das Luftfiltergehäuse 2 wird deformiert. Die Sollbruchstelle 13 ist am Übergang des Randes 9 in die Halbschale 3 ausgebildet. Die Sollbruchstelle 13 ist als Nut 20 ausgebildet. Die Wandstärke b in der Nut 20 ist geringer als die Wandstärke in umliegenden Bereichen. Als zweckmäßig hat sich eine Wandstärke b von 0,5 mm bis 1,0 mm, insbesondere von etwa 0,8 mm, erwiesen. Um zu ermöglichen, daß das Gehäuse 2 sich im Bereich der Sollbruchstelle 13 teleskopartig zusammenschiebt, ist die Innenweite 1 auf der dem Rand zugewandten Seite der Sollbruchstelle 13 größer als das Außenmaß k der Halbschale 3 auf der gegenüberliegenden Seite der Sollbruchstelle 13. Bei einem Aufprall bricht das Gehäuse 2 in der Nut 20, und die Halbschale 3 kann sich in die Halbschale 4 schieben. Dabei wird der Filtereinsatz 7 von der Halbschale 3 zerstört. Im Bereich des Übergangs des Daches 22 in die Seitenwände 23 des Halbschale 3 ist eine Sollbruchstelle 15 vorgesehen, die eine Wandstärke a besitzt. Die Wandstärke a ist geringer als die Wandstärke des Daches 22 und der Seitenwand 23 und beträgt vorteilhaft 0,5 mm bis 1,0 mm, insbesondere etwa 0,8 mm. Um eine hohe Verformung zu ermöglichen, ist das Außenmaß h am Dach 22 kleiner als die Innenweite i im Bereich der Seitenwände 23. Dadurch kann das Dach 22 in die erste Halbschale 3 gedrückt werden.

Weiterhin ist eine Sollbruchstelle 17 in der zweiten Halbschale 4 ausgebildet. Das Außenmaß f an der dem Boden 26 zugewandten Seite der Sollbruchstelle 17 ist dabei kleiner als die Innenweite g an der gegenüberliegenden, der ersten Halbschale 3 zugewandten Seite. Zur Befestigung des Gehäuses 2 ist eine Halterung 19 an der zweiten Halbschale 4 angeformt, die an einem tragenden Teil im Kraftfahrzeug festgeschraubt werden kann.

In Fig. 4 ist eine Ausführungsvariante für eine Sollbruchstelle 13 dargestellt. Die Dichtung 9 des Filtereinsatzes 7 ist in einer Aufnahme 28 im Rand 10 angeordnet und vom Rand 9 gehalten. Der Rand 27 der zweiten Halbschale 4 drückt die Dichtung 8 in den Rand 9. Der Rand 27 ist dabei genau gegenüberliegend zur Nut 20 angeordnet. Bei einer Kraft auf die erste Halbschale 3 stanzt der Rand 27 den Rand 9 von der ersten Halbschale 3. Hierdurch wird die benötigte Kraft zur Auslösung einer Deformation noch verkleinert. Die Wandstärke c im Bereich der Nut 20 ist kleiner als die im umliegenden Bereich und beträgt zweckmäßig 0,5 mm bis 1,0 mm, insbesondere etwa 0,8 mm.

In Fig. 5 ist eine Sollbruchstelle 16 dargestellt, die beispielsweise im Bereich der in Fig. 3 dargestellten Sollbruchstelle 17 angeordnet sein kann. Die Sollbruchstelle 16 besitzt einen mittleren Bereich 29 mit einer geringen Wandstärke d, die 0,5 mm bis 1,0 mm, insbesondere etwa 0,8 mm, beträgt. Die benachbarten Bereiche 30 und 31 sind gegeneinander versetzt angeordnet, dabei verlaufen die Bereiche 30 und 31 etwa parallel zueinander und etwa senkrecht zum mittleren Bereich 29. Die beiden Bereiche 30 und 31 weisen senkrecht zu ihrer Längsrichtung gesehen zueinander einen Abstand m auf.

Bei dem in Fig. 6 dargestellten Ausführungsbeispiel einer Sollbruchstelle 17 verlaufen die Bereiche 30 und 31 ebenfalls parallel und versetzt zueinander, sie haben zueinander jedoch keinen Abstand. Im mittleren Bereich 29 weist die Sollbruchstelle 17 eine geringe Wandstärke e von etwa 0,5 mm bis 1,0 mm, insbesondere von 0,8 mm, auf.

In Fig. 7 ist ein Luftfiltersystem 1 dargestellt, bei dem die erste Halbschale 3 umlaufende Falten 18 aufweist. Die Falten sind im Bereich der Seitenwand 23 angeordnet und bestehen aus einem Material mit geringer Festigkeit, insbesondere einem elastischen Material wie einem Elastomerwerkstoff. Als vorteilhaft wird insbesondere EPDM (Ethylen-Propylen-Terpolymer) angesehen. Beim Ausführungsbeispiel in Fig. 4 sind vier Falten 18 vorgesehen. Es kann jedoch auch eine andere Anzahl von Falten 18 zweckmäßig sein. Beim Aufprall eines Fußgängers werden die elastischen Falten 18 zusammengedrückt und das Luftfiltersystem 1 deformiert. Zusätzlich besitzt das Luftfiltersystem 1 die bereits beschriebenen Sollbruchstellen 13, 15 und 17.

Es kann zweckmäßig sein, daß mindestens eine der Halbschalen 3, 4 aus einem porösen Material gebildet ist. Das poröse Material ist dabei insbesondere ein Sinterwerkstoff oder ein geschäumter Werkstoff. Insbesondere ist die zweite Halbschale 4, die einer Motorhaube 14 abgewandt ist und die die Rohluftseite des Luftfiltersystems 1 beinhaltet, aus einem porösen Material gebildet. Um die Aufprallkräfte unmittelbar einzuleiten, kann es jedoch auch zweckmäßig sein, daß die die Reinluftseite umfassende erste Halbschale 3 aus einem porösen Material gebildet ist. Die erste Halbschale 3 ist dann zweckmäßig mit einer Folie bedeckt. Die Folie kann auf der Außenseite oder auf der Innenseite des porösen Materials angeordnet sein. Es kann auch zweckmäßig sein, beide Halbschalen 3 und 4 aus einem porösen Material auszubilden. Auch eine Kombination der Ausbildung aus einem porösen Material und der Sollbruchstellen 13, 15, 16, 17 und/oder der Ausbildung aus einem elastischen Material kann zweckmäßig sein.

## Patentansprüche

1. Luftfiltersystem zum Einbau in geringem Abstand unter der äußeren Karosseriehaut eines Kraftfahrzeugs im aufprallgefährdeten Bereich von Fußgängern, mit einem Gehäuse (2), **dadurch gekennzeichnet, dass** das Gehäuse (2) mindestens einen zur Verformung bestimmten Abschnitt aufweist, der eine geringe mechanische Festigkeit besitzt.

2. Luftfiltersystem nach Anspruch 1,
**dadurch gekennzeichnet, daß** ein Abschnitt mit geringer Festigkeit umlaufend am Gehäuse (2) angeordnet ist.

3. Luftfiltersystem nach Anspruch 1 oder 2,
**dadurch gekennzeichnet, daß** der Abschnitt als Sollbruchstelle (13, 15, 16, 17) ausgebildet ist.

4. Luftfiltersystem nach Anspruch 3,
**dadurch gekennzeichnet, daß** die Sollbruchstelle (13, 15, 16, 17) gegenüber benachbarten Bereichen eine geringe Wandstärke (a, b, c, d, e) besitzt.

5. Luftfiltersystem nach Anspruch 4,
**dadurch gekennzeichnet, daß** die Sollbruchstelle (13) durch eine umlaufende Nut (20) gebildet ist.

6. Luftfiltersystem nach Anspruch 4 oder 5,
**dadurch gekennzeichnet, daß** die Wandstärke (a, b, c, d, e) an der Sollbruchstelle (13, 15, 16, 17) zwischen 0,5 mm und 1,0 mm, insbesondere etwa 0,8 mm, beträgt.

7. Luftfiltersystem nach einem der Ansprüche 3 bis 6,
**dadurch gekennzeichnet, daß** das Außenmaß (f, h, k) des Gehäuses (2) auf der einen Seite der Sollbruchstelle (17, 15, 13) kleiner als die Innenweite (g, i, l) des Gehäuses (2) auf der gegenüberliegenden Seite der Sollbruchstelle (17, 15, 13) ist.

8. Luftfiltersystem nach einem der Ansprüche 1 bis 6,
**dadurch gekennzeichnet, daß** der zur Verformung bestimmte Abschnitt durch ein Material mit geringer mechanischer Festigkeit gebildet ist.

9. Luftfiltersystem nach Anspruch 8,
**dadurch gekennzeichnet, daß** das Material mit geringer Festigkeit als umlaufende Falte (18) an dem Gehäuse (2) angeordnet ist.

10. Luftfiltersystem nach Anspruch 8 oder 9,
**dadurch gekennzeichnet, daß** das Material ein Elastomerwerkstoff, insbesondere EPDM ist.

11. Luftfiltersystem nach einem der Ansprüche 1 bis 10,
**dadurch gekennzeichnet, daß** ein Abschnitt durch ein poröses Material gebildet ist.

12. Luftfiltersystem nach Anspruch 11,
**dadurch gekennzeichnet, daß** das poröse Material ein Sinterwerkstoff oder ein geschäumter Werkstoff ist.

13. Luftfiltersystem nach einem der vorherigen Ansprüche,
**dadurch gekennzeichnet, daß** das Gehäuse (2) des Luftfiltersystems (1) aus zwei Halbschalen (3, 4) gebildet ist.

14. Luftfiltersystem nach Anspruch 13,
**dadurch gekennzeichnet, daß** die die Reinseite des Luftfiltersystems (1) umfassende Halbschale (3) des Gehäuses (2) aus einem porösen Material sowie einer das poröse Material bedeckenden Folie aufgebaut ist.

15. Luftfiltersystem nach Anspruch 13 oder 14,
**dadurch gekennzeichnet, daß** die die Rohseite des Luftfiltersystems (1) umfassende Halbschale (4) aus einem porösen Material besteht.

## Claims

1. Air filter system for being mounted at a small distance under the outer body skin of a motor vehicle in the area where pedestrians risk an impact, with a housing (2), **characterized in that** the housing (2) features at least one section intended for being deformed which has a low mechanical resistance.

2. Air filter system according to claim 1,
**characterized in that** a section with low resistance is disposed around the housing (2).

3. Air filter system according to claim 1 or 2,
**characterized in that** the section is designed as predetermined breaking point (13, 15, 16, 17).

4. Air filter system according to claim 3,
**characterized in that** the predetermined breaking point (13, 15, 16, 17) has a thin wall thickness (a, b, c, d, e) compared with adjacent areas.

5. Air filter system according to claim 4,
**characterized in that** the predetermined breaking point (13) is formed by a circumferential groove (20).

6. Air filter system according to claim 4 or 5,
**characterized in that** the wall thickness (a, b, c, d, e) at the predetermined breaking point (13, 15, 16, 17) is between 0.5 mm and 1.0 mm, in particular approx. 0.8 mm.

7. Air filter system according to one of the claims 3 to 6,
**characterized in that** the outer dimension (f, h, k) of the housing (2) is smaller at one side of the predetermined breaking point (17, 15, 13) than the inner span (g, i, 1) of the housing (2) at the opposite side of the predetermined breaking point (17, 15, 13).

8. Air filter system according to one of the claims 1 to 6,
**characterized in that** the section intended for being deformed is made of a material with low mechanical resistance.

9. Air filter system according to claim 8,
**characterized in that** the material with low resistance is disposed as circumferential fold (18) at the housing (2).

10. Air filter system according to claim 8 or 9,
**characterized in that** the material is an elastomer material, in particular EPDM.

11. Air filter system according to one of the claims 1 to 10,
**characterized in that** one section is formed by a porous material.

12. Air filter system according to claim 11,
**characterized in that** the porous material is a sinter material or a foamed material.

13. Air filter system according to one of the above claims,
**characterized in that** the housing (2) of the air filter system (1) is made of two half shells (3, 4).

14. Air filter system according to claim 13,
**characterized in that** the half shell (3) of the housing (2) that comprises the clean side of the air filter system (1) is composed of a porous material as well as of a foil covering the porous material.

15. Air filter system according to claim 13 or 14,
**characterized in that** the half shell (4) that comprises the raw air side of the air filter system (1) is made of a porous material.

## Revendications

1. Système de filtre à air pour le montage à une distance réduite sous l'habitacle extérieur de carrosserie d'un véhicule automobile dans la zone présentant un risque de choc avec des piétons, avec un boîtier (2), **caractérisé en ce que** le boîtier (2) présente au moins une section destinée à être déformée et qui fait preuve d'une faible résistance mécanique.

2. Système de filtre à air selon la revendication 1,
**caractérisé en ce qu'**une section avec une faible résistance est disposée tout autour du boîtier (2).

3. Système de filtre à air selon la revendication 1 ou 2,
**caractérisé en ce que** la section est conçue comme point de rupture théorique (13, 15, 16, 17).

4. Système de filtre à air selon la revendication 3,
**caractérisé en ce que** le point de rupture théorique (13, 15, 16, 17) fait preuve d'une épaisseur de paroi plus réduite (a, b, c, d, e) que celle des zones avoisinantes.

5. Système de filtre à air selon la revendication 4,
**caractérisé en ce que** le point de rupture théorique (13) est formé par une rainure circulaire (20).

6. Système de filtre à air selon la revendication 4 ou 5,
**caractérisé en ce que** l'épaisseur de la paroi (a, b, c, d, e) au niveau du point de rupture théorique (13, 15, 16, 17) est comprise entre 0,5 mm et 1,0 mm et est notamment de 0,8 mm environ.

7. Système de filtre à air selon l'une des revendications 3 à 6,
**caractérisé en ce que** la dimension extérieure (f, h, k) du boîtier (2) est, d'un côté du point de rupture théorique (17, 15, 13), inférieure à la dimension intérieure (g, i, 1) du boîtier (2) du côté opposé au point de rupture théorique (17, 15, 13).

8. Système de filtre à air selon l'une des revendications 1 à 6,
**caractérisé en ce que** la section destinée à être déformée est réalisée dans un matériau présentant une faible résistance mécanique.

9. Système de filtre à air selon la revendication 8,
**caractérisé en ce que** le matériau présentant une faible résistance est disposé en forme de pli circulaire (18) sur le boîtier (2).

10. Système de filtre à air selon la revendication 8 ou 9,
**caractérisé en ce que** le matériau est un élastomère, notamment de l'EPDM.

11. Système de filtre à air selon l'une des revendications 1 à 10,
**caractérisé en ce qu'**une section est constituée d'un matériau poreux.

12. Système de filtre à air selon la revendication 11,
**caractérisé en ce que** le matériau poreux est un matériau fritté ou un matériau expansé.

13. Système de filtre à air selon l'une des revendications précédentes,
**caractérisé en ce que** le boîtier (2) du système de filtre à air (1) est constitué de deux semi-monocoques (3, 4).

14. Système de filtre à air selon la revendication 13,
**caractérisé en ce que** la semi-monocoque (3) du boîtier (2) entourant le côté filtré du système de filtre à air (1) est constituée d'un matériau poreux et d'un film recouvrant le matériau poreux.

15. Système de filtre à air selon la revendication 13 ou 14,
**caractérisé en ce que** la semi-monocoque (4) entourant le côté non filtré du système de filtre à air (1) est constituée d'un matériau poreux.
